# EUROPEAN PATENT SPECIFICATION

(11) **EP 2 807 572 B1**
(45) Date of publication and mention of the grant of the patent: **23.03.2016**
(21) Application number: 13708933.0
(22) Date of filing: 25.01.2013
(51) Int. Cl.: G06F 13/42

(54) **MULTI-LANE HIGH-SPEED INTERFACES FOR HIGH SPEED SYNCHRONOUS SERIAL INTERFACE (HSI), AND RELATED SYSTEMS AND METHODS**
MEHRSPURIGE HOCHGESCHWINDIGKEITSSCHNITTSTELLEN FÜR SCHNELLE SYNCHRON-SERIELLE SCHNITTSTELLE (HSI) SOWIE ENTSPRECHENDE SYSTEME UND VERFAHREN
INTERFACES À GRANDE VITESSE ET À BANDES MULTIPLES POUR INTERFACE SYNCHRONE SÉRIE À GRANDE VITESSE (HSI), ET SYSTÈMES ET PROCÉDÉS APPARENTÉS

(30) Priority: 25.01.2012 US 201213358312
(43) Date of publication of application: 03.12.2014
(73) Proprietor: Qualcomm Incorporated, San Diego, CA 92121 (US)
(72) Inventor: SHACHAM, Assaf, San Diego California 92121 (US); GIL, Amit, San Diego California 92121 (US)
(74) Representative: Catesby, Olivia Joanne
(86) International application number: PCT/US2013/023308
(87) International publication number: WO 2013/112946

(56) References cited:
- US-A1- 2009 248 978
- US-A1- 2009 327 539

## Description

### BACKGROUND

### I. Field of the Disclosure

The technology of the disclosure relates generally to communications interfaces for integrated circuit (IC) chip to IC chip communications.

### II. Background

Electronic devices have proliferated throughout society supporting a wide range of applications and uses. As the number and variety of devices expands, there is an increasing desire for electronic devices to communicate with one another. Likewise, there is a growing desire to increase the speed with which components within a single device communicate with one another to increase throughput. In response to the desire to increase speed, various techniques and protocols have been proposed and adopted.

The MIPI® Alliance is one of the leaders in developing communication protocols for use by various devices. In particular, from September 2008 to January 2009, the MIPI® Alliance approved and published a physical layer protocol and specification that specifies the physical layer of the High Speed Synchronous Serial Interface (HSI). Version 1.01.00 of this specification is available for download to subscribed MIPI members, but an overview is discussed at www.mipi.org/specifications/high-speed-synchronous-serial-interface-hsi. The MIPI HSI specification outlines a protocol that allows bidirectional, symmetrical chip to chip communications and is particularly well suited for use in mobile semiconductor applications. A particularly contemplated application of the HSI specification is to allow an application die, such as a main processor, to communicate with a cellular die (e.g., a cellular modem) within a mobile terminal. The raw throughput of this specification is limited to about 173 Mbps in each direction. While Long Term Evolution (LTE) Category 3 (CAT3) throughput can be achieved at these data rates, higher LTE categories are not supported. New solutions are desired to allow for increasingly large bandwidth and throughput requirements. US2009/248978 discloses the use of one additional USB data path configured to carry additional data in parallel with the data carried by another USB data path, the data being striped across the two data paths.

### SUMMARY OF THE DISCLOSURE

Embodiments disclosed in the detailed description include a multi-lane high speed interface for a modified High Speed Synchronous Serial Interface (HSI) system and methods. By modifying the HSI interface to include plural parallel data paths, data throughput is improved to accommodate the higher data rates. In this regard in one embodiment, an electronic device configured to operate using a modified High Speed Synchronous Serial Interface (HSI) protocol, comprises a transmit communications interface. The transmit communications interface comprises a HSI protocol data path configured to carry data from the electronic device, a HSI protocol ready path configured to carry an HSI protocol compliant READY signal, and a flag path configured to carry a FLAG signal. The transmit communications interface further comprises one or more additional data paths configured to carry additional data in parallel with the data carried by the HSI protocol data path, such that the HSI protocol data path and the one or more additional data paths carry HSI protocol compliant data striped across the HSI protocol data path and the one or more additional data paths.

In another embodiment, an electronic device configured to operate using a modified High Speed Synchronous Serial Interface (HSI) protocol, comprises a transmit communications interface. The transmit communications interface comprises means for providing a data path configured to carry data from the electronic device, means for providing a ready path configured to carry an HSI protocol compliant READY signal, and means for providing a flag path configured to carry a FLAG signal The transmit communications interface further comprises means for providing one or more additional data paths configured to carry additional data from the electronic device in parallel with the data carried by the means for providing a data path, such that the means for providing a data path and means for providing the one or more additional data paths carry HSI protocol compliant data striped across the data path and the one or more additional data paths.

In another embodiment, a method for operating a modified High Speed Synchronous Serial Interface (HSI) protocol device, comprises providing a ready path configured to carry an HSI protocol compliant READY signal, providing a flag path configured to carry FLAG signal, and providing at least two transmit data paths configured to carry data from an electronic device in parallel such that HSI protocol compliant data is striped across the at least two data paths.

### BRIEF DESCRIPTION OF THE FIGURES

Figure 1 is an exemplary system level block diagram of a conventional chip to chip communication system using an HSI communication protocol;
Figure 2 is an exemplary diagram of a conventional bidirectional communication link between chips, according to the HSI communication protocol;
Figure 3 is an exemplary diagram of conventional DATA and FLAG signals showing how bit edges are denoted using the FLAG signal in the HSI communication protocol;
Figure 4 is an exemplary diagram of a conventional serial framed DATA signal, according to the HSI communication protocol;
Figure 5 is an exemplary embodiment of a modified bidirectional HSI communication link according to the present disclosure;
Figures 6A-6C illustrate exemplary data signals striped across the additional data lanes of the present disclosure;
Figure 7 is an exemplary chart illustrating data throughputs achievable through the present disclosure;
Figure 8 is an exemplary chart illustrating additional pin counts used to facilitate embodiments of the present disclosure; and
Figure 9 is a block diagram of an exemplary processor-based system that can include the communication chip of Figure 5.

### DETAILED DESCRIPTION

With reference now to the drawing figures, several exemplary embodiments of the present disclosure are described. The word "exemplary" is used herein to mean "serving as an example, instance, or illustration." Any embodiment described herein as "exemplary" is not necessarily to be construed as preferred or advantageous over other embodiments.

Embodiments disclosed in the detailed description include a multi-lane high speed interface for a modified High Speed Synchronous Serial Interface (HSI) system and methods. By modifying a HSI interface to include plural parallel data paths, data throughput is improved to accommodate higher data rates. In this regard in one embodiment, an electronic device configured to operate using a modified High Speed Synchronous Serial Interface (HSI) protocol, comprises a transmit communications interface. The transmit communications interface comprises a data path configured to carry data from the electronic device, a ready path configured to carry an HSI protocol compliant READY signal, and a flag path configured to carry an FLAG signal. The transmit communications interface further comprises one or more additional data paths configured to carry additional data from the electronic device in parallel with the data carried by the data path such that the data path and the one or more additional data paths carry HSI protocol compliant data striped across the data path and the one or more additional data paths.

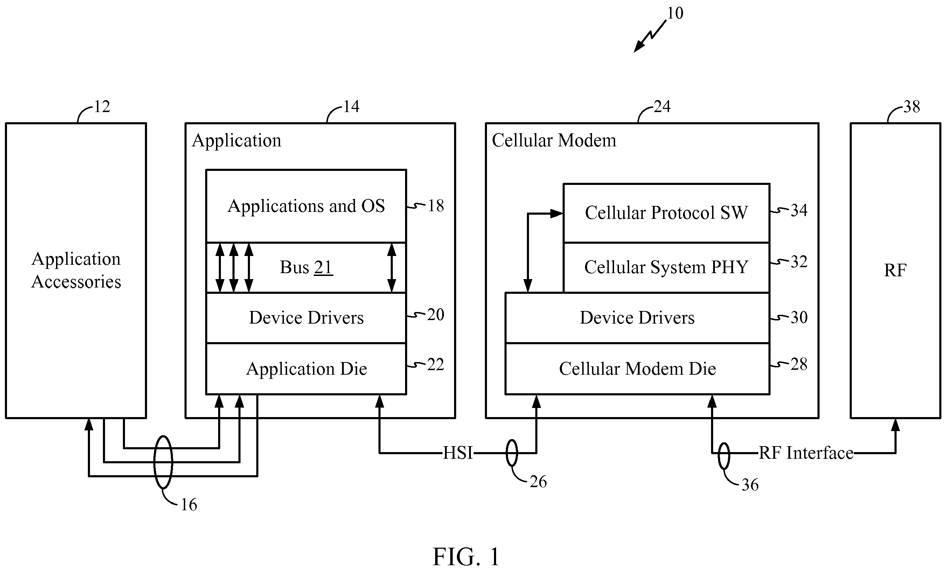

In this regard, Figure 1 is a conventional HSI communication system 10. The communication system 10 may be, in an exemplary embodiment, used within a mobile terminal such as a cellular phone, smart phone, laptop computer, tablet computer, or the like. The communication system 10 may include application accessories 12 such as a display, camera, keyboard, and/or other input and output devices. The communication system 10 may further include an application module 14 that communicates with the application accessories 12 through communication links 16. The application module 14 may include various applications and an operating system (OS) 18 that control device drivers 20 directly or through a bus 21. The device drivers 20 in turn may control the communications links 16 through an application die (or chip) 22. The application die 22 may communicate with a cellular modem 24 through an HSI compliant communication link 26. The cellular modem 24 may include a cellular modem die 28, which interoperates with device drivers 30 and physical elements 32 of the cellular system, as well as the software elements 34 of the cellular modem 24 as is well understood. The cellular modem die 28 may communicate through a radio frequency (RF) interface 36, such as an antenna to the RF spectrum 38 for wireless communications (e.g., a cellular based phone call or the like).

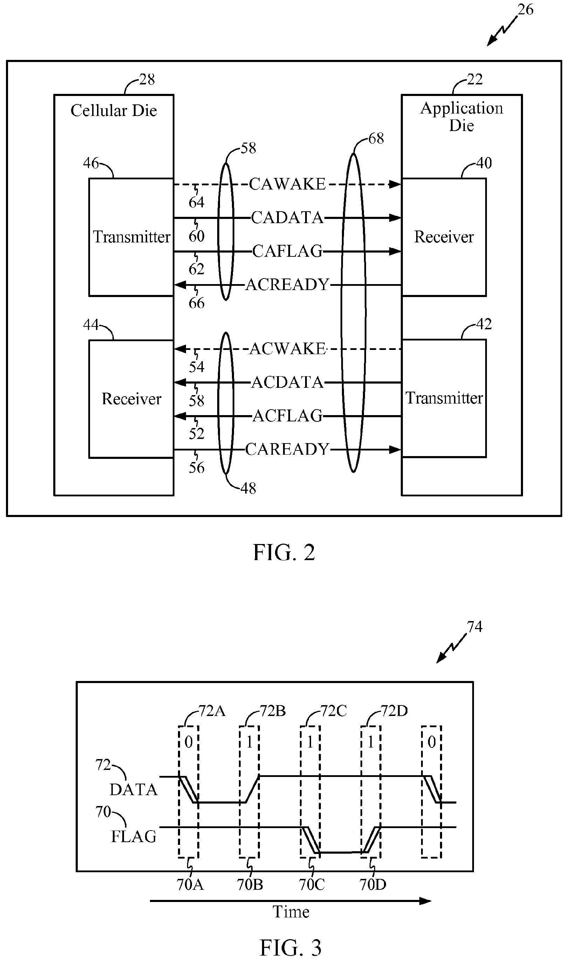

With reference to Figure 2, the HSI compliant communication link 26 is illustrated in more detail. The application die 22 includes an application receiver 40 and an application transmitter 42. The cellular modem die 28 includes a cellular receiver 44 and a cellular transmitter 46. The application transmitter 42 transmits a unidirectional link 48 to the cellular receiver. The unidirectional link 48 includes an ACDATA path 50, an ACFLAG path 52, and an optional ACWAKE path 54. The cellular receiver 44 also responds to the application transmitter 42 with a CAREADY path 56. Similarly, the cellular transmitter 46 transmits a unidirectional link 58 to the application receiver 40. The unidirectional link 58 includes a CADATA path 60, a CAFLAG path 62, and an optional CAWAKE path 64. The application receiver 40 also responds to the cellular transmitter 46 with an ACREADY path 66. (Note that the direction of the path can be determined by the first two letters: AC is an Application > Cellular direction and CA is a Cellular > Application direction.) Collectively, both unidirectional links 48, 58 form a bidirectional link 68. The unidirectional links 48, 58 are symmetrical in the sense that they have the same number of paths and transmit the same sorts of signals over the respective paths.

While the signals on the WAKE, DATA, FLAG, and READY (both AC and CA) paths are defined by the MIPI® HSI protocol, Figure 3 provides a brief illustration 74 of the conventional interplay between the signal on the FLAG path 70 and signal on the DATA path 72. That is, the FLAG signal is used to indicate repeated bits on the DATA signal. Thus, the FLAG signal remains constant at points 70A, 70B. Concurrently, the DATA signal transitions at points 72A, 72B. However, if the DATA signal remains constant, such as at points 72C, 72D, the FLAG signal changes values, as evidenced at points 70C, 70D. Thus, at each bit, either the DATA signal or the FLAG signal transitions such that the application receiver 40 and the cellular receiver 44 know that another bit has been received.

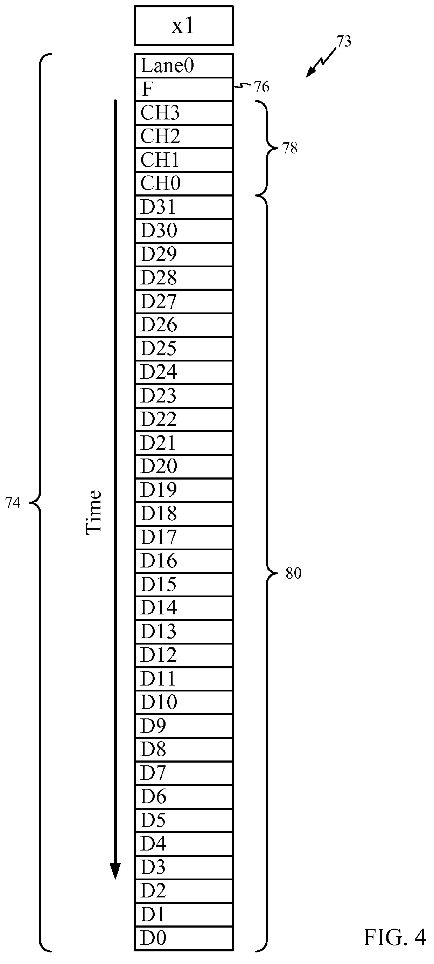

In the MIPI® HSI protocol, the signal on the DATA path 72 may be broken into frames or streamed. An exemplary conventional framed DATA signal 73 is illustrated in Figure 4. The DATA signal 73 includes a frame 74 that has thirty-seven bits. The first bit 76 is a frame bit to denote the beginning of the frame 74. The next four bits are channel identifier (CHID) bits 78. The final thirty-two bits are information bits 80. The CHID bits 78 may be used to identify which application, such as one of the applications (or OS) 18 (Figure 1), is sending or is to receive the information bits 80. Again, the elements of Figures 1-4 are conventional and part of the MIPI® HSI standard. The interested reader is directed to the MIPI® standards document entitled, "MIPI ALLIANCE SPECIFICATION FOR HIGH-SPEED SYNCHRONOUS SERIAL INTERFACE (HSI) PHYSICAL LAYER" version 1.01.00, published 30 September 2008. As noted above, the arrangement set forth by the MIPI® HSI standard is limited to about 173 Mbps throughput. While this is adequate for Long Term Evolution (LTE) Category 3 (CAT3) requirements, this throughput is insufficient to support higher category requirements (e.g., CAT4 or CAT5).

Against this backdrop, the present disclosure proposes increasing throughput by adding parallel data paths or lanes and striping the data of the original HSI standard across the data lanes. The number of additional data lanes added will determine the throughput that may be achieved. Adding one, three, or seven additional lanes are exemplary additions and the latter allows for even the highest currently contemplated throughput requirements to be accommodated.

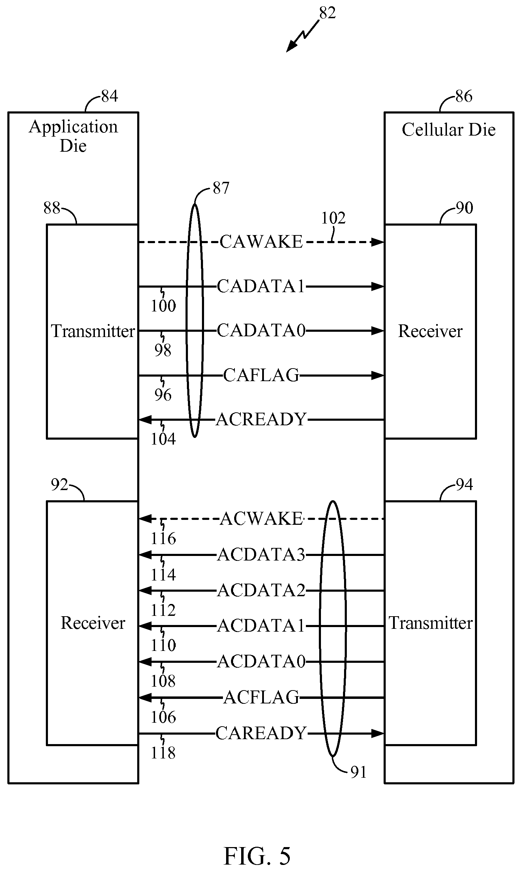

In this regard, a system 82 according to an exemplary embodiment of the present disclosure is provided with reference to Figure 5. While the system 82 is illustrated as being asymmetrical, it should be appreciated that additional data lanes may be added symmetrically if desired without departing from the scope of the present disclosure. The system 82 includes an application die 84 and a cellular die 86. In this context, both the application die 84 and the cellular die 86 are sometimes referred to herein as electronic devices 84, 86. The application die 84 includes an application transmitter 88 (sometimes referred to herein as a transmit communications interface) that communicates via an uplink signal 89 with a cellular receiver 90 in the cellular die 86. The application die 84 also includes an application receiver 92 (also a transmit communications interface) that communicates via a downlink signal 91 with a cellular transmitter 94 in the cellular die 86.

With continuing reference to Figure 5, the uplink signal 89 includes a CAFLAG path 96, a CADATA0 path 98, a CADATA1 path 100, and optionally a CAWAKE path 102 transmitted from the application transmitter 88 to the cellular receiver 90. The uplink signal 89 also includes an ACREADY path 104 from the cellular receiver 90 to the application transmitter 88. While CADATA0 path 98 and CADATA1 path 100 are shown, it should be appreciated that two, four, or eight DATA paths may be provided.

With continuing reference to Figure 5, the downlink signal 91 includes an ACFLAG path 106, ACDATA0 path 108, ACDATA1 path 110, ACDATA2 path 112, ACDATA3 path 114, and an optional ACWAKE path 116 transmitted from the cellular transmitter 94 to the application receiver 92. The downlink signal 91 also includes a CAREADY path 118 from the application receiver 92 to the cellular transmitter 94. While four DATA paths are illustrated, it should be appreciated that two, four, or eight DATA paths may be provided.

With continuing reference to Figure 5, the signals on the WAKE and READY paths are identical to those found in the MIPI® HSI protocol. The FLAG signal, similarly to the MIPI® HSI protocol standard, indicates repeated bits on the DATA0 signal by transitioning at the boundary between two identical consecutive bits on the DATA0 path.

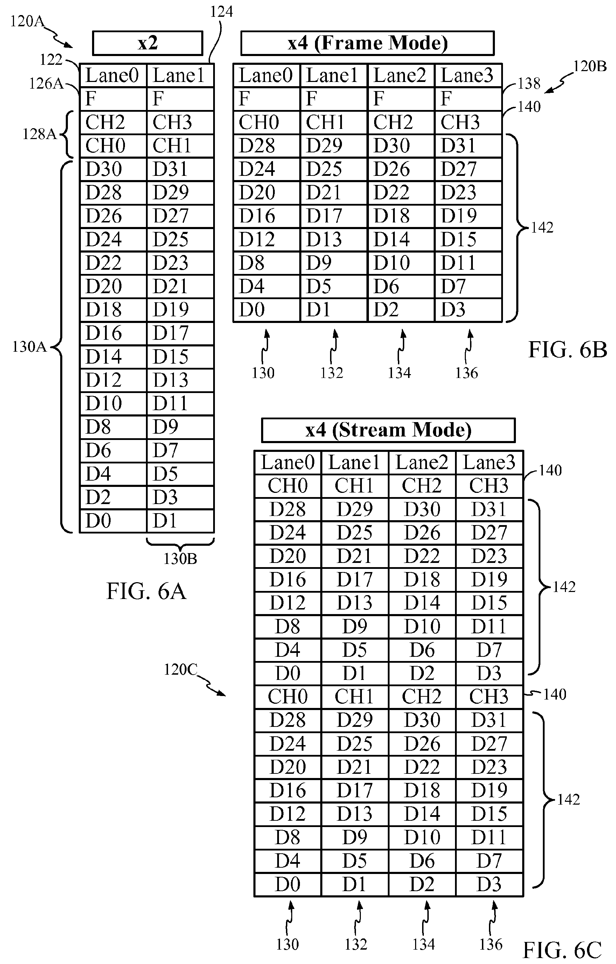

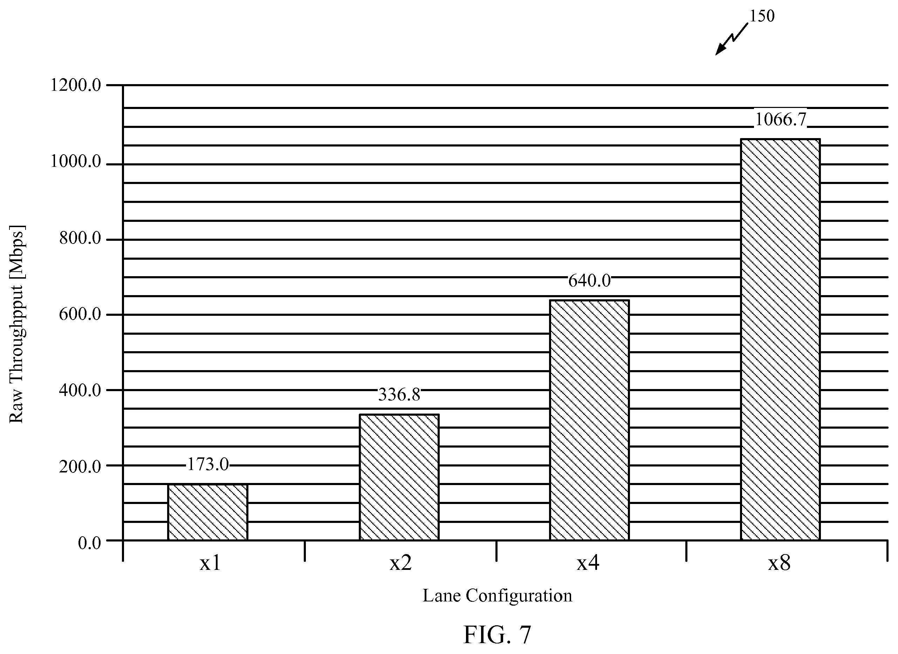

In contrast to the framed data signal 73 of Figure 4, this embodiment stripes the data into the separate DATA0, DATA1, etc. paths. The data striping is illustrated in Figures 6A-6C. Striping, as that term is used herein, refers to the process of taking the serial data of data signal 73 and horizontally distributing the data through the plurality of data paths. With reference to Figure 6A, the data signal 120A is provided in two lanes, specifically Lane0 122 and Lane1 124, which are sent via DATA0 path 98 and DATA1 path 100 respectively. The Lane0 122 and Lane1 124 each have a frame bit 126A, 126B, two CHID bits 128A, 128B, and sixteen information bits 130A, 130B. As better illustrated with reference to Figure 7 and as explained below, striping the data across the two data lanes essentially approximately doubles data throughput enabling use of higher category protocols (e.g., LTE CAT4).

Similarly, in Figure 6B, the data signal 120B is provided in four lanes, specifically Lane0 130, Lane1 132, Lane2 134, and Lane3 136. Each lane has a frame bit 138 and a CHID bit 140, as well as eight information bits 142. Again, as better illustrated with reference to Figure 7 and as explained below, striping the data across the four lanes improves the data throughput.

Similarly, in Figure 6C, the data signal 120C is provided in four lanes, specifically, Lane0 130, Lane1 132, Lane2 134, and Lane3 136. However, the data signal 120C is sent in a stream mode, without the framing bit 138. Omission of the framing bit allows marginally higher throughputs since no bits are used to denote the frame. Elimination of the framing bit improved the throughput even further because the those bits are now free to convey information bits.

With continued reference to Figures 6A-6C, it should be appreciated that the data should be striped across the DATA paths consistently. That is, DATA0 path 98 may always receive the D0 bit, DATA1 path 100 may always receive the D1 bit and so on. In this manner, the data is not sent sequentially on any DATA path, but rather is striped across the DATA paths. That is, as illustrated in Figure 6A, in DATA0, D0, D2, D4, etc. are sent and the bits in DATA0 are not sequential.

Figure 7 provides a comparison chart 150 of throughput rates depending on the number of lanes in the data signal. As noted above, a single lane, corresponding to the conventional HSI protocol, allows a throughput of approximately 173 Mbps. In contrast to the throughput of a single lane, the multiple, parallel lanes of the present disclosure allow for increased throughputs depending on how many lanes are added. If one lane is added (i.e., two total lanes) then the throughput is approximately 337 Mbps. Note that this is slightly less than double the throughput of a single lane. This reduction is a function of the frame bit being included in each data path (as opposed to a single frame bit in the single path). If three lanes are added (i.e., four total lanes) then the throughput is approximately 640 Mbps. Again, this value is slightly less than four times the throughput of a single lane and again, this difference is because of the duplication of the frame bits. If seven lanes are added (i.e., eight total lanes) then the throughput is approximately 1067 Mbps. Again, this value is somewhat less than eight times the throughput of a single data lane, and this difference is because of the presence of the additional frame bits. Throughputs are slightly higher if the data is sent in a streamed format rather than a framed format as noted above.

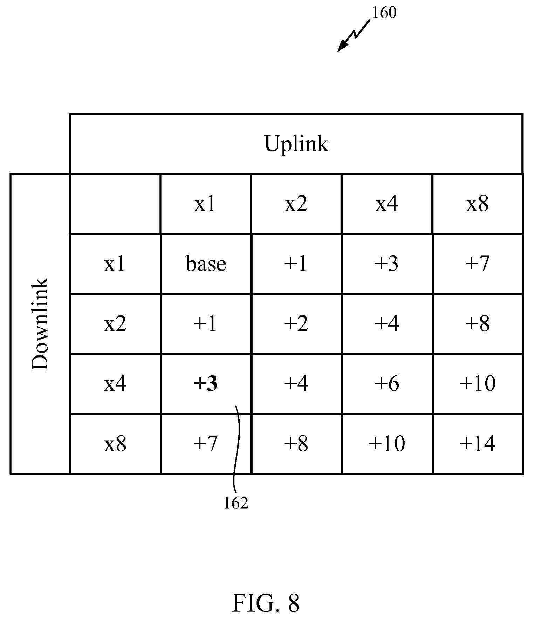

The addition of data lanes requires the addition of pins to the electronic devices 84, 86. The number of pins added directly corresponds to the number of lanes added. An exemplary chart 160 is provided in Figure 8 that illustrates how many pins are needed based on how many uplink and downlink lanes are provided. Thus, if the uplink has one lane, but the downlink has four lanes, then three additional pins 162 are required beyond what would normally have been provided under the HSI standard. Since pins are a relatively expensive component in a die, a chart, such as chart 160, may be used when evaluating cost/benefit tradeoffs by a designer. That is, if a particular throughput is required, and requires the addition of pins, the designer may evaluate its impact on the cost of the electronic device.

Note that the addition of the additional data lanes may also necessitate defining a query and response from the application die 84 to the cellular modem die 86 wherein the application die 84 queries the cellular modem die 86 initially on just the DATA0 path as to the capabilities of the cellular modem die 86 (i.e., how many data paths can the cellular modem die 86 handle transmitting and receiving) and then instructing the cellular modem die 86 to operate on a number of transmit and receive data paths compatible with the number of data paths that the application die 84 can accommodate. For example, if the application die 84 can transmit on four data paths and receive on two data paths, but the cellular modem die 86 can transmit on eight data paths and receive on eight data paths, then the application die 84 may instruct the cellular modem die to transmit on two data paths and receive on four data paths so that the maximum throughput can be achieved.

The multi-lane high speed interface for HSI and related systems and methods, according to embodiments disclosed herein, may be provided in or integrated into any processor-based device. Examples, without limitation, include a set top box, an entertainment unit, a navigation device, a communications device, a fixed location data unit, a mobile location data unit, a mobile phone, a cellular phone, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, and a portable digital video player.

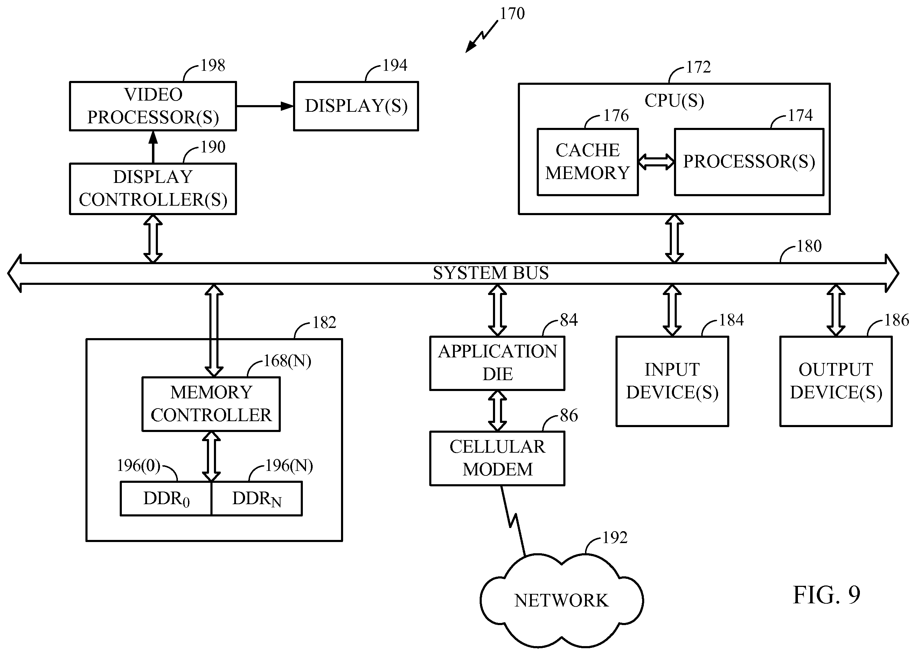

In this regard, Figure 9 illustrates an example of a processor-based system 170 that can employ an application die 84 as illustrated in Figure 5. In this example, the processor-based system 170 includes one or more central processing units (CPUs) 172, each including one or more processors 174. The CPU(s) 172 may be a master device. The CPU(s) 172 may have cache memory 176 coupled to the processor(s) 174 for rapid access to temporarily stored data. The CPU(s) 172 is coupled to a system bus 180 and can intercouple master devices and slave devices included in the processor-based system 170. As is well known, the CPU(s) 172 communicates with these other devices by exchanging address, control, and data information over the system bus 180. For example, the CPU(s) 172 can communicate bus transaction requests to the memory controller 168(N) as an example of a slave device. Although not illustrated in Figure 9, multiple system buses 180 could be provided, wherein each system bus 180 constitutes a different fabric.

Other master and slave devices can be connected to the system bus 180. As illustrated in Figure 9, these devices can include a memory system 182, one or more input devices 184, one or more output devices 186, and one or more display controllers 190, as examples. The input device(s) 184 can include any type of input device, including but not limited to input keys, switches, voice processors, etc. The output device(s) 186 can include any type of output device, including but not limited to audio, video, other visual indicators, etc. The network 192 can be any type of network, including but not limited to a wired or wireless network, private or public network, a local area network (LAN), a wide local area network (WLAN), and the Internet. The memory system 182 can include one or more memory units 196(0-N).

The CPU 172 may also be configured to access the display controller(s) 190 over the system bus 180 to control information sent to one or more displays 194. The display controller(s) 190 sends information to the display(s) 194 to be displayed via one or more video processors 198, which process the information to be displayed into a format suitable for the display(s) 194. The display(s) 194 can include any type of display, including but not limited to a cathode ray tube (CRT), a liquid crystal display (LCD), a plasma display, etc.

The CPU(s) 172 and the display controller(s) 190 may act as master devices to make memory access requests over the system bus 180. Different threads within the CPU(s) 172 and the display controller(s) 190 may make requests. The CPU(s) 172 and the display controller(s) 190 may provide the MID over the bus, as previously described, as part of a bus transaction request.

Those of skill in the art would further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. The arbiters, master devices, and slave devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a processor, a DSP, an Application Specific Integrated Circuit (ASIC), an FPGA or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The embodiments disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. It is to be understood that the operational steps illustrated in the flow chart diagrams may be subject to numerous different modifications as will be readily apparent to one of skill in the art. Those of skill in the art would also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

## Claims

1. An electronic device (86) configured to operate using a modified High Speed Synchronous Serial Interface, HSI, protocol, comprising:
a transmit communications interface (94) comprising:
means for providing a HSI protocol data path (108) configured to carry data from the electronic device;
means for providing a HSI protocol ready path (118) configured to carry an HSI protocol compliant READY signal; and (106)
means for providing a HSI protocol flag path (106) configured to carry a FLAG signal;
wherein the transmit communications interface further comprises:
means for providing one or more additional data paths (110,112,114,116) configured to carry additional data from the electronic device in parallel with the data carried by the means for providing a data path such that the means for providing a data path and means for providing the one or more additional data paths carry HSI protocol compliant data striped across the data path and the one or more additional data paths.

2. The electronic device of claim 1 wherein the HSI protocol compliant data is framed.

3. The electronic device of claim 2 wherein framed data is denoted by a frame bit within each data stream on the data path and the one or more additional data paths.

4. The electronic device of claim 1 wherein the HSI protocol compliant data comprises a channel identifier, CHID communicated on the data path and the one or more additional data paths.

5. The electronic device of any previous claim, wherein the one or more additional data paths comprises one, three, or seven additional data paths.

6. The electronic device of claim 1, wherein data striped across the HSI protocol data path and the one or more additional data paths comprises channel identification bits striped across the data paths or a first information bit on the HSI protocol data path or information bits striped across four data paths.

7. The electronic device of any previous claim, further comprising a receive communications interface comprising a plurality of receive data paths.

8. The electronic device of any previous claim, further comprising a number of interface pins, each interface pin configured to carry a respective data path from among the data path and the one or more additional data paths.

9. The electronic device of any previous claim, integrated into a semiconductor die.

10. The electronic device of any previous claim, further comprising a plurality of receive data paths configured to receive HSI compliant data striped across the plurality of receive data paths.

11. The electronic device of any previous claim wherein the one or more additional data paths are configured to only carry the data unidirectionally from the transmit communications interface.

12. The electronic device (86) of any previous claim, further comprising a receive communications interface (90) comprising:
a second HSI protocol data path (98) configured to receive second data at the electronic device;
a second HSI protocol FLAG path (96) configured to receive a second FLAG signal; and
a second HSI protocol ready path (104) configured to transmit a second HSI protocol compliant READY signal;
wherein the receive communications interface further comprises:
one or more additional second data paths (100) configured to receive additional second data in parallel with the second data received by the second HSI protocol data path, such that the second HSI protocol data path and the one or more additional second data paths receive HSI protocol compliant data striped across the second HSI protocol data path and the one or more additional second data paths.

13. The electronic device of claim 12 wherein a number of the one or more additional second data paths configured to receive the second data in the receive communications interface is not equal to a number of the one or more additional data paths configured to transmit the data in the transmit communications interface or wherein a number of the one or more additional second data paths configured to receive the second data in the receive communications interface is equal to a number of the one or more additional data paths configured to transmit the data in the transmit communications interface.

14. A method for operating a modified High Speed Synchronous Serial Interface, HSI protocol device, comprising:
providing a ready path configured to carry an HSI protocol compliant READY signal;
providing a flag path configured to carry a FLAG signal;
providing at least two transmit data paths configured to carry data from an electronic device in parallel such that HSI protocol compliant data is striped across the at least two data paths.

## Patentansprüche

1. Eine Elektronikeinrichtung (86), die konfiguriert ist, um unter Verwendung eines modifizierten Protokolls einer synchronen, seriellen Hochgeschwindigkeitsschnittstelle bzw. HSI-Protokolls (HSI = High Speed Synchronous Serial Interface) zu arbeiten, die Folgendes aufweist:
eine Sendekommunikationsschnittstelle (94), die Folgendes aufweist:
Mittel zum Vorsehen eines HSI-Protokoll-Datenpfades (108), der konfiguriert ist um Daten von der Elektronikeinrichtung zu befördern;
Mittel zum Vorsehen eines HSI-Protokoll-Bereitschaftspfades (118), der konfiguriert ist, um ein HSI-Protokoll-konformes READY- bzw. BEREIT-Signal zu befördern; und
Mittel zum Vorsehen eines HSI-Protokoll-Flag-Pfades (106), der konfiguriert ist, um ein FLAG-Signal zu befördern;
wobei die Sendekommunikationsschnittstelle weiter Folgendes aufweist:
Mittel zum Vorsehen eines oder mehrerer zusätzlicher Datenpfade (110, 112, 114, 116), die konfiguriert sind zum Befördern zusätzlicher Daten von der Elektronikeinrichtung parallel zu den Daten, die durch die Mittel zum Vorsehen eines Datenpfades befördert werden, so dass die Mittel zum Vorsehen eines Datenpfades und die Mittel zum Vorsehen der ein oder mehreren zusätzlichen Datenpfade HSI-Protokoll-konforme Daten verteilt über den Datenpfad und den einen oder die mehreren zusätzlichen Datenpfade hinweg befördern.

2. Elektronikeinrichtung nach Anspruch 1, wobei die HSI-Protokoll-konformen Daten gerahmt sind.

3. Elektronikeinrichtung nach Anspruch 2, wobei die gerahmten Daten durch ein Rahmenbit innerhalb jedes Datenstroms auf dem Datenpfad und den ein oder mehreren zusätzlichen Datenpfaden bezeichnet sind.

4. Elektronikeinrichtung nach Anspruch 1, wobei die HSI-Protokoll-konformen Daten einen Kanalidentifizierer bzw. CHID (CHID = channel identifier) aufweisen, der auf dem Datenpfad und den ein oder mehreren zusätzlichen Datenpfaden kommuniziert wird.

5. Elektronikeinrichtung nach einem vorhergehenden Anspruch, wobei der eine oder die mehreren zusätzlichen Datenpfade einen, drei oder sieben zusätzliche Datenpfade aufweisen.

6. Elektronikeinrichtung nach Anspruch 1, wobei die Daten, die verteilt über den HSI-Protokoll-Datenpfad und den einen oder die mehreren zusätzlichen Datenpfade hinweg vorliegen Kanalidentifikationsbits, die verteilt über den Datenpfad hinweg vorliegen oder ein erstes Informationsbit auf dem HSI-Protokolldatenpfad oder Informationsbits, die verteilt über vier Datenpfade hinweg vorliegen, aufweisen.

7. Elektronikeinrichtung nach einem vorhergehenden Anspruch, die weiter eine Empfangskommunikationsschnittstelle aufweist, die eine Vielzahl von Empfangsdatenpfaden aufweist.

8. Elektronikeinrichtung nach einem vorhergehenden Anspruch, die weiter eine Anzahl von Schnittstellen-Pins bzw. -Anschlüssen aufweist, wobei jeder Schnittstellen-Anschluss konfiguriert ist, einen jeweiligen Datenpfad von den Datenpfaden und den ein oder mehreren zusätzlichen Datenpfaden zu tragen.

9. Elektronikeinrichtung nach einem vorhergehenden Anspruch, die in einen Halbleiterchip integriert ist.

10. Elektronikeinrichtung nach einem vorhergehenden Anspruch, die weiter eine Vielzahl von Empfangsdatenpfaden aufweist, die konfiguriert sind, um HSIkonforme Daten zu empfangen, die verteilt über die Vielzahl von Empfangsdatenpfaden hinweg vorliegen.

11. Elektronikeinrichtung nach einem vorhergehenden Anspruch, wobei der eine oder die mehreren zusätzlichen Datenpfade konfiguriert sind, um nur die Daten unidirektional von der Sendekommunikationsschnittstelle zu befördern.

12. Elektronikeinrichtung (86) nach einem vorhergehenden Anspruch, die weiter eine Empfangskommunikationsschnittstelle (90) aufweist, die Folgendes aufweist:
einen zweiten HSI-Protokolldatenpfad (98), der konfiguriert ist, um zweite Daten an der Elektronikeinrichtung zu empfangen;
einen zweiten HSI-Protokoll-FLAG-Pfad (96), der konfiguriert ist, um ein zweites FLAG-Signal zu empfangen; und
einen zweiten HSI-Protokoll-Bereitschaftspfad (104), der konfiguriert ist, um ein zweites HSI-Protokoll-konformes BEREIT-Signal zu senden;
wobei die Empfangskommunikationsschnittstelle weiter Folgendes aufweist:
einen oder mehrere zusätzliche zweite Datenpfade (100), der bzw. die konfiguriert sind zum Empfangen zusätzlicher zweiter Daten parallel zu den zweiten Daten, die über den zweiten HSI-Protokoll-Datenpfad empfangen werden, so dass der zweite HSI-Protokoll-Datenpfad und die ein oder mehreren zusätzlichen zweiten Datenpfade HSI-Protokoll-konforme Daten verteilt über den zweiten HSI-Protokoll-Datenpfad und den einen oder die mehreren zusätzlichen zweiten Datenpfade hinweg empfangen.

13. Elektronikeinrichtung nach Anspruch 12, wobei eine Anzahl der ein oder mehreren zusätzlichen zweiten Datenpfade, die konfiguriert ist zum Empfangen der zweiten Daten in der Empfangskommunikationsschnittstelle, nicht gleich zu einer Anzahl der ein oder mehreren zusätzlichen Datenpfade ist, die konfiguriert sind zum Senden der Daten in der Sendekommunikationsschnittstelle oder wobei eine Anzahl der ein oder mehreren zusätzlichen zweiten Datenpfade, die konfiguriert ist zum Empfangen der zweiten Daten in der Empfangskommunikationsschnittstelle gleich einer Anzahl der ein oder mehreren zusätzlichen Datenpfade ist, die konfiguriert ist zum Senden der Daten in der Sendekommunikationsschnittstelle.

14. Ein Verfahren zum Betreiben einer Einrichtung für ein modifiziertes HSI-Protokoll (HSI = High Speed Synchronous Serial Interface bzw. synchrone, serielle Hochgeschwindigkeitsschnittstelle), die Folgendes aufweist:
Vorsehen eines Bereitschaftspfades, der konfiguriert ist zum Befördern eines HSI-Protokoll-konformen READY- bzw. BEREIT-Signales;
Vorsehen eines Flag-Pfades, der konfiguriert ist zum Befördern eines FLAG-Signals;
Vorsehen von wenigstens zwei Sendedatenpfaden, die konfiguriert sind zum parallelen Befördern von Daten von einer Elektronikeinrichtung, so dass die HSI-Protokoll-konformen Daten verteilt über die wenigstens zwei Datenpfade hinweg vorliegen.

## Revendications

1. Un dispositif électronique (86) configuré pour fonctionner en utilisant un protocole d'interface synchrone série à grande vitesse, HSI, modifié, comprenant:
une interface de communication de transmission (94), comprenant :
des moyens pour fournir un chemin de données de protocole HSI (108) configuré pour transporter des données à partir du dispositif électronique;
des moyens aptes à fournir un chemin prêt à transmettre (118) du protocole HSI configuré pour transmettre un signal READY conforme au protocole HSI ; et
des moyens pour fournir un chemin de drapeau (106) du protocole HSI configuré pour transporter un signal FLAG ;
dans lequel l'interface de communication de transmission comprend en outre :
des moyens pour fournir un ou plusieurs chemins de données supplémentaires (110, 112, 114, 116) configurés pour transporter des données supplémentaires à partir du dispositif électronique en parallèle avec les données transportées par les moyens pour fournir un chemin de données de sorte que les moyens pour fournir un chemin de données ainsi que le moyen pour fournir le ou plusieurs chemins de données supplémentaires transportent des données conformes au protocole HSI distribuées horizontalement à travers les chemins de données ainsi que l'un ou plusieurs chemins de données supplémentaires.

2. Le dispositif électronique de la revendication 1, dans lequel les données conformes au protocole HSI sont mises sous forme de trames.

3. Le dispositif électronique selon la revendication 2, dans lequel les données mises sous forme de trames sont indiquées par un bit de trame dans chaque flux de données sur le chemin de données et les un ou plusieurs chemins de données supplémentaires.

4. Le dispositif électronique selon la revendication 1, dans lequel les données conformes au protocole HSI comprennent un identificateur de canal, CHID, communiqué sur le chemin de données et les un ou plusieurs chemins de données supplémentaires.

5. Le dispositif électronique selon la revendication 1, dans lequel les uns ou plusieurs chemins de données supplémentaires comprennent un, trois ou sept chemins de données supplémentaires.

6. Le dispositif électronique selon la revendication 1, dans lequel les données distribuées horizontalement à travers le chemin de données de protocole HSI et le ou plusieurs chemins de données supplémentaires comprennent des bits d'identification de canal distribués horizontalement à travers les chemins de données, ou un premier bit d'information sur le chemin de données du protocole HSI, ou des bits d'information distribués horizontalement à travers quatre chemins de données.

7. Le dispositif électronique selon l'une quelconque des revendications précédentes, comprenant en outre une interface de réception de communication comprenant une pluralité de chemins de données de réception.

8. Le dispositif électronique selon l'une quelconque des revendications précédentes, comprenant en outre un nombre de broches d'interface, chaque broche d'interface étant configurée pour porter un chemin de données respectif parmi les chemins de données ainsi que les un ou plusieurs chemins de données supplémentaires.

9. Le dispositif électronique selon l'une quelconque des revendications précédentes, intégré dans une puce semi-conductrice.

10. Le dispositif électronique selon l'une quelconque des revendications précédentes, comprenant en outre une pluralité de chemins de données de réception configurés pour recevoir des données conformes au protocole HSI qui sont distribuées horizontalement à travers la pluralité de chemins de réception de données.

11. Le dispositif électronique selon l'une quelconque des revendications précédentes, dans lequel l'un ou plusieurs chemins de données supplémentaires sont configurés pour ne transporter que de façon unidirectionnelle les données à partir de l'interface de communication de transmission.

12. Le dispositif électronique (86) selon l'une quelconque des revendications précédentes, comprenant en outre une interface de communication de réception (90) comprenant :
un deuxième chemin de données (98) du protocole HSI configuré pour recevoir des deuxième données au niveau du dispositif électronique ;
un deuxième chemin FLAG (96) du protocole HSI configuré pour recevoir un deuxième signal FLAG ; et
un deuxième chemin prêt à transmettre (104) du protocole HSI configuré pour transmettre un deuxième signal READY conforme au protocole HSI ;
dans lequel l'interface de réception de communication comprend en outre :
un ou plusieurs deuxième chemins de données supplémentaires (100) configurés pour recevoir des deuxième données supplémentaires en parallèle avec les deuxième données reçues sur le deuxième chemin de données du protocole HSI, de sorte que le deuxième chemin de données du protocole HSI ainsi que le ou plusieurs deuxième chemins de données supplémentaires reçoivent des données conformes au protocole HSI qui sont distribuées horizontalement à travers le deuxième chemin de données du protocole HSI ainsi que l'un ou plusieurs deuxième chemins de données supplémentaires.

13. Le dispositif électronique selon la revendication 12, dans lequel un nombre de l'un ou plusieurs deuxième chemins de données supplémentaires configurés pour recevoir les deuxième données au niveau de l'interface de communication de réception n'est pas égal à un nombre de l'un ou plusieurs chemins de données supplémentaires configurés pour transmettre les données au niveau de l'interface de communication de transmission ou dans lequel un nombre de l'un ou plusieurs deuxième chemins de données supplémentaires configurés pour recevoir les deuxième données au niveau de l'interface de communication de réception est égal à un nombre de l'un ou plusieurs chemins de données supplémentaires configurés pour transmettre les données au niveau de l'interface de communication de transmission.

14. Un procédé d'exploitation d'un dispositif utilisant un protocole d'interface synchrone série à grande vitesse, HSI, modifié, comprenant les étapes consistant à :
fournir un chemin prêt à transmettre configuré pour transmettre un signal READY conforme au protocole HSI ;
fournir un chemin de drapeau configuré pour transporter un signal FLAG ;
fournir au moins de chemins de données de transmission configuré pour transporter des données à partir d'un dispositif électronique en parallèle de sorte que des données conformes au protocole HSI soient distribuées horizontalement à travers les au moins deux chemins de données.
